# EUROPEAN PATENT SPECIFICATION

(11) **EP 0 718 771 B1**
(45) Date of publication and mention of the grant of the patent: **07.11.2001**
(21) Application number: 94309883.0
(22) Date of filing: 22.12.1994
(51) Int. Cl.: G06F 13/28

(54) **DMA logic unit architecture**
DMA-Logikeinheitsarchitektur
Architecture d'unité de logique DMA

(43) Date of publication of application: 26.06.1996
(73) Proprietor: UNITED MICROELECTRONICS CORPORATION, Science-Based Industrial Park, Hsinchu City (TW)
(72) Inventor: Kao Shu-Jen, Shih-Lin District Taipei TAIWAN, R.O.C. (TW); Huang, Shi-Chung, Hsinchu Taiwan, R.O.C. (TW)
(74) Representative: Skone James, Robert Edmund

(56) References cited:
- EP-A- 0 293 860
- US-A- 4 403 282
- ELEKTRONIK, vol. 36,no. 20, 2 October 1987 MUNCHEN DE, pages 100-104, FURTNER 'DMA-Controller an der CPU 68020'
- IBM TECHNICAL DISCLOSURE BULLETIN, vol. 29,no. 2, July 1986 NEW YORK US, pages 864-868, 'Hardware-Assisted Byte Alignment for High-Speed Digital Communications Processors'

## Description

### Field of the Invention

The present invention relates in general to the digital circuitry architecture of Direct Memory Access (DMA) logic units in microprocessor-based computer systems. In particular, the present invention relates to a DMA logic unit having a data bit width compatibility with that of its system address bus. More particularly, the present invention relates to a DMA logic unit a having a data bit width capable of setting up address parameters for DMA transfer in minimum steps.

### Technical Background

DMA is an important and widely used computer system methodology whereby peripheral devices interface with memory resources of a microprocessor-based host computer system to which the peripheral devices are connected. Dedicated DMA subsystems, which typically include a DMA controller or DMA logic unit, coordinate the memory access by the peripheral devices installed on the system bus of the host system.

In general, a DMA operation executed in a computer system involves block data transfers between the peripheral device and the main memory of the host computer system without requiring Central Processing Unit (CPU) intervention. Normally, once the CPU starts the DMA transfer, blocks of data would be transferred between main memory and the storage area of the peripheral device involved in the DMA access.

The underlying idea of such block data transfer during the DMA process is to improve data transfer throughput over the system bus. Typical peripheral devices residing on the system bus are normally low-speed devices, or, at least the characteristics of the system bus limit the speed of data exchange between the peripheral device and the computer system itself. In microprocessor-based computer systems such as, for example, the Industry Standard Architecture (ISA) computers, typical peripheral devices that employ DMA to transfer data to and from the main memory array of the host computer system include, for example, floppy diskette drives, certain tape storage devices based on the Quarter Inch Cartridge (QIC) standard, some sound effect interface adapters, as well as some bus mastering Small Computer System Interface (SCSI) controller adapters.

Modern microprocessor-based computer systems now use microprocessors which greatly out-perform the slower peripheral devices attached to the system bus. The freeing up of the CPU during DMA cycles not only allows the CPU to simultaneously perform other tasks not involved in the DMA process, but also improves the data transfer of the slower peripheral device to and from main memory. This improvement primarily results from the block mode of data transfer that is coordinated by the hardware, including the DMA controller, of the computer system.

One familiar DMA architecture can be found in the IBM PC/AT computer systems, which are frequently referred to as ISA computer systems. In the system board logic unit of such an ISA computer, a DMA subsystem is based on a pair of the 8237 programmable DMA controller chips made by Intel Corporation of Santa Clara, California. Two publications show the detail of this implementation of a DMA logic unit architecture in a typical microprocessor-based computer system. The logic unit circuitry of the IBM PC-AT computer can be found in the Technical Reference portion of the document series Personal Computer Hardware Reference Library, published by International Business Machines Corporation of Armonk, New York. Details of the 8237 DMA controller device can be found in Peripherals publication of Intel Corporation.

Conventional DMA controllers such as the Intel 8237 were designed for early 16-bit microprocessors. It has an address bus of only 8 bits, requiring an external address latch having at least 8 bits of address bit width to implement its full 64K addressing range. In the DMA subsystem of an ISA computer, a standard TTL device 74LS612, which is a memory mapper capable of expanding 4-bit address lines into 12-bit address lines for paged memory mapping is employed to allow the 8237 to address, in page mode, the full 1M byte of address range in a standard ISA computer. Even at the time when early 16-bit microprocessors such as the Intel 8086/8088 microprocessors were dominant, an addressing range of 64K was still insufficient. The 80286 microprocessor has an address bus of 20 bits, capable of directly addressing a memory range of 1M bytes. When the successor to the IBM PC, the PC-AT, was introduced, memory mappers such as the 74LS612 mentioned above would be needed for DMA operations to be implemented over the full 20-bit addressing range.

Another improvement of the limited addressing capability of these prior art DMA controllers can be found in U. S. Patent No. 4,530,053, issued on Jul. 16, 1985 to Kriz et al and titled "DMA Multimode Transfer Controls." Kriz et al employs circuitry to provide a multimode data transfer capability to a native single transfer mode DMA controller such as the MC6844 device made by Motorola Inc.

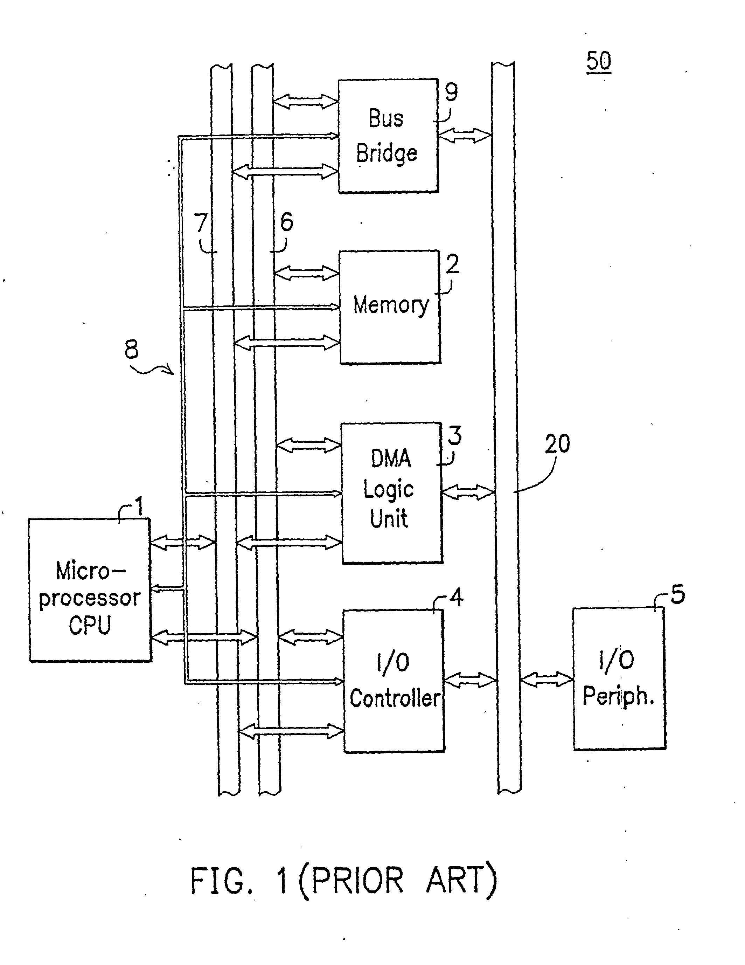

As another example of the prior art, refer to FIG. 1 of the accompanying drawings of the present invention, in which a typical prior art DMA logic unit architecture as used in a microprocessor-based computer system is depicted to describe the general operation of DMA access. In host computer system 50, when a request signal is sent from I/O controller 4 over signal line 8 to microprocessor CPU 1, microprocessor CPU 1 will perform a service routine preparing microprocessor CPU 1 to relinquish its control over system address and data buses 6 and 7 respectively. This allows DMA logic unit 3 to initiate the direct memory access operations between memory 2 and I/O peripheral devices 5 through bus bridge 9. DMA logic unit 3 receives requests from I/O peripheral devices 5 for DMA data transfer and implements arbitration of priority over the DMA channel. Parameters, including the address bits as well as the number of bytes of data to be transferred, are prepared and sent over data bus 7 by triggering properly on address bus 6 coupled to the internal registers of DMA logic unit 3. The direct memory transfer is then performed via address and data buses 6, 7 and 20 from main memory 2 through DMA logic unit 3 and bus bridge 9 to the memory (not shown) of I/O peripheral devices 5.

However, in such implementations, the data bits transferred between memory 2 and I/O peripheral device 5 are restricted by the bit width of DMA logic unit 3. Since a conventional DMA logic unit architecture has a DMA logic unit with bit width far less than that of data and/or address bus, the original address is divided into several base address parts and is accompanied by an expanded set of address bits, or a page address, to be recognized when received and thus satisfy bit widths of both data and/or address bus and DMA logic unit. That is, data transferred over buses 6, 7 and 20 consists not only of the original data but a page address so that it can be correctly accessed between memory devices. The additional bits in the transferred data reduce the DMA efficiency and therefore impact the overall performance of the entire computer system.

For example, in a computer employing the 32-bit i486 microprocessor made by Intel Corporation as the CPU for the system, to implement a 32-bit DMA operation utilizing a DMA logic unit architecture such as the one shown in FIG. 1, a typical sequence of multiple-step preparatory operations would have to be carried out before the DMA access can actually initiate. These preparatory operations in the DMA controller used in such a system are as follows:
1. Programming a base register.
2. Programming a page register.
3. Programming a base count register
4. Programming a control register.
5. Clearing a mask register.
6. Initiating the DMA access request to the DMA controller.

In the above six generalized steps, Steps 1 and 2 are concerned with the providing of the base and expanded, or page address, information for the DMA controller to set up the full set of address bits for the supporting logic unit circuitry. Step 3 is concerned with setting the amount of data in bytes to be transferred in the DMA access. Step 4 is concerned with the selection of DMA transfer mode to be implemented by the DMA controller. Finally, Steps 5 and 6 finally initiate the DMA access operation.

Therefore, as stated above, a conventional 8-bit DMA controller needs at least 6 programming steps to prepare for 32-bit bit widths, that is, it needs twice 8-bit base address programming, twice 8-bit page address programming and twice 8-bit base count programming. These multiple programming steps take time and also do not fully utilize the bus capacity.

Moreover, in prior art DMA controllers such as described above, 32-bit DMA transfer is limited by the fact that the page register is restricted to 8 and 16-bit modes. These modes are incompatible with the address bus width of the 32-bit CPU and further restrict address alignment for double word addresses.

US-A-4403282 provides a data processing system having a channel providing direct access to I/O device memory without intervention from the CPU. They system further includes a memory allocation unit for controller memory access. EP-A-0293860 and "DMA-Controller an der CPU 68020" (ELEKTRONIK, vol.36, no. 20, 2 October 1989, MUNCHEN DE) also disclose direct memory access control devices.

It is therefore an object of the present invention to provide a DMA logic unit circuit architecture which improves the efficiency of the DMA operation by having the DMA logic unit's register data bus bit width compatible with the system dat bus bit width.

It is another object of the present invention to provide a DMA logic unit circuit architecture which improves the efficiency of the DMA operation by having a bus compatibility which provides for increased address modes and improves the handling of address alignment involving larger addressing range.

These objects are solved by the apparatus as set forth in independent claim 1.

The subclaims are directed to preferred embodiments of the invention.

### BRIEF DESCRIPTION OF THE DRAWINGS

The detailed description of the preferred embodiment is made with reference to the accompanying drawings, wherein:
FIG. 1 is a block diagram of a conventional DMA logic unit as implemented in a typical microprocessor-based computer system;
FIG. 2 is a block diagram of a DMA logic unit in accordance with a preferred embodiment of the present invention;
FIG. 3 is a block diagram of a DMA controller device of the DMA logic unit of FIG. 2;
FIG. 4 is a block diagram of an address alignment logic unit of the DMA logic unit of FIG. 2;
FIG. 5 is a block diagram of a mode register of the DMA logic unit of FIG. 3;
FIG. 6 is a block diagram of the arbiter of a DMA logic unit of FIG. 3;
FIG. 7 is a block diagram of a control logic unit of the DMA logic unit of FIG. 3; and
FIG. 8 is a block diagram of an address generator of the DMA logic unit of FIG. 3.

### DETAILED DESCRIPTION OF THE PREFERRED EMBODIMENT

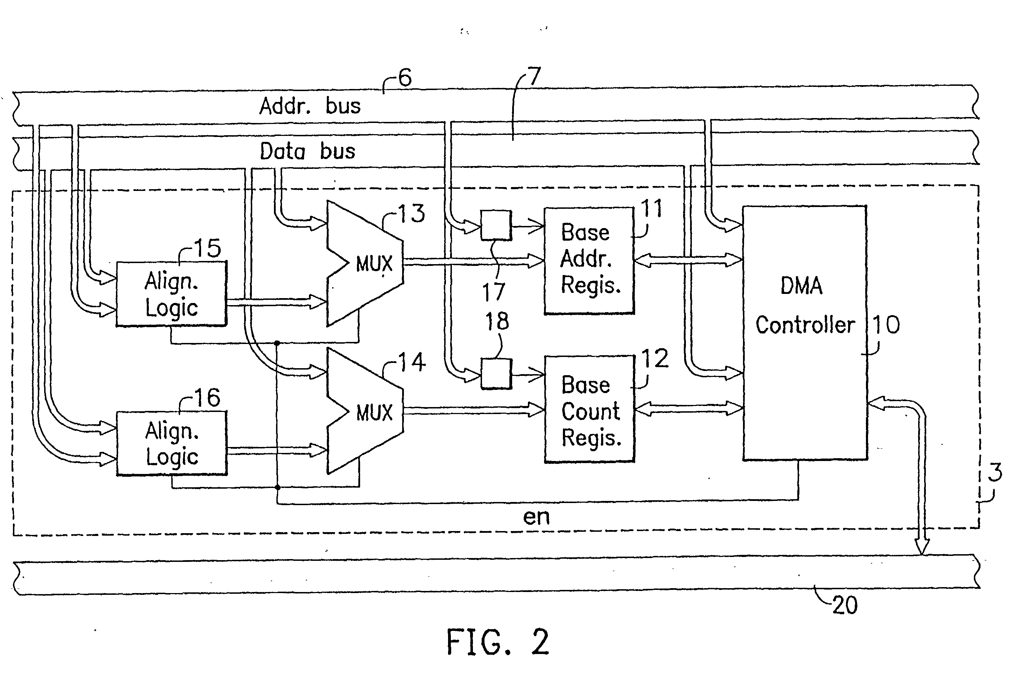

Referring to FIG. 2 of the drawings, a block diagram of DMA logic unit 3 in accordance with a preferred embodiment of the present invention is shown.

DMA logic unit 3, through two system buses, specifically address bus 6 and data bus 7 respectively, provides DMA transfer services between I/O peripheral devices 5 and main memory 2 for computer system 50 depicted in FIG 1. DMA logic unit 3 includes a pair of first and second address alignment logic units 15 and 16 respectively, a pair of first and second multiplexers 13 and 14 respectively, base address register 11, base count register 12, and DMA controller 10.

DMA logic unit 3 receives DMA transfer requests from I/O peripheral devices residing on the system buses 6,7 of host computer system 50 via bus 20. First and second address alignment logic units 15 and 16 both retrieve data via data bus 7 by the address and page code information over address bus 6, for aligning and generating the base address and base count data involved in the DMA transfer. The two address alignment logic units 15 and 16 are provided with compatibility with a conventional DMA controller with a page address code.

First multiplexer 13 is used to select one of its two input sources for output to base address register 11. One input source of first multiplexer 13 is connected to data bus 7, while the other input source is connected to the output of first alignment logic unit 15. First multiplexer 13 is used for obtaining the base address data for the DMA transfer either directly from data bus 7 as issued by the system, or the base address data as organized by the processing of first alignment logic unit 15 (described in more detail below).

Second multiplexer 14, on the other hand, is used to obtain the base count data for the DMA transfer either directly from data bus 7 as provided by the system, or the base count data as organized by the processing of second alignment logic unit 16 (described in more detail below). The existence of first and second alignment logic units 15 and 16, as well as first and second multiplexers 13 and 14, provide the ability of DMA logic unit 3 to have compatibility with I/O peripheral devices 5 conforming to compatibility requirements of the prior art systems.

Base address register 11 receives and stores the output of first multiplexer 13, which is the base address involved in the DMA transfer. The updating operation of base address register 11 is controlled by decoder 17 which utilizes the address from address bus 6 to generate an enable signal.

Base count register 12 receives and stores the output of second multiplexer 14, which is the transfer byte-count of the data to be transferred in the DMA operation. The updating operation of base count register 11 is controlled by decoder 18 which utilizes the address from address bus 6 to generate an enable signal.

Thus, multiplexers 13 and 14 get data from data bus 7 (or alignment logic units 15 and 16) and pass the data to base address register 11 and base count register 12. Addresses are compared in decoders 17 and 18 thus triggering registers 11 and 12 to read in new data from the multiplexers.

At this point, it is necessary to indicate an important requirement for first and second alignment logic units 15 and 16, first and second multiplexers 13 and 14, as well as base address and base count registers 11 and 12. The data bit width they process, or store, must be sufficiently wide to incorporate the address parameters involved in the preparation of the DMA transfer requested. In other words, the data bit width of parts 11, 12, 13, 14, 15 and 16 must be sufficiently wide to process the address information in one fetch. In the case of, for example, a computer system featuring a 32-bit addressing space, and a 32-bit data path in its memory subsystem, if the DMA controller must cover the entire addressing range of the system memory subsystem, with a double-word, namely a 32-bit DMA transfer, and if the starting, or, base address for the DMA transfer must be at any random double word boundary, then the data bit width of parts 11-16 must be at least 32 bits. This data bit width can be set narrower if the base address boundary for start of transfer is set to a sizable block, which is normally the transfer mode for DMA access. For example, if the minimum block size is 4K bytes, then the data bit width for parts 11-16 can be narrowed down to 20 (32-12) bits.

DMA controller 10 is responsible of receiving the DMA transfer requests initiated by the I/O peripheral devices residing on the system bus, and implements arbitration for the grant of the system bus control for the dedicated DMA operation by issuing request acknowledge signals to the selected I/O peripheral device when its requested priority becomes the highest and is accepted. DMA controller 10 is the controlling device responsible for the direct memory access operation, which actually monitors and manipulates the DMA transfer. DMA controller 10 utilizes the base address as stored in base address register 11 as the starting address of the main memory address space for the starting point of data retrieval or storage, and utilizes the base count as stored in base count register 12 as the transfer byte-count for controlling the length of the block of data bytes involved in the DMA transfer.

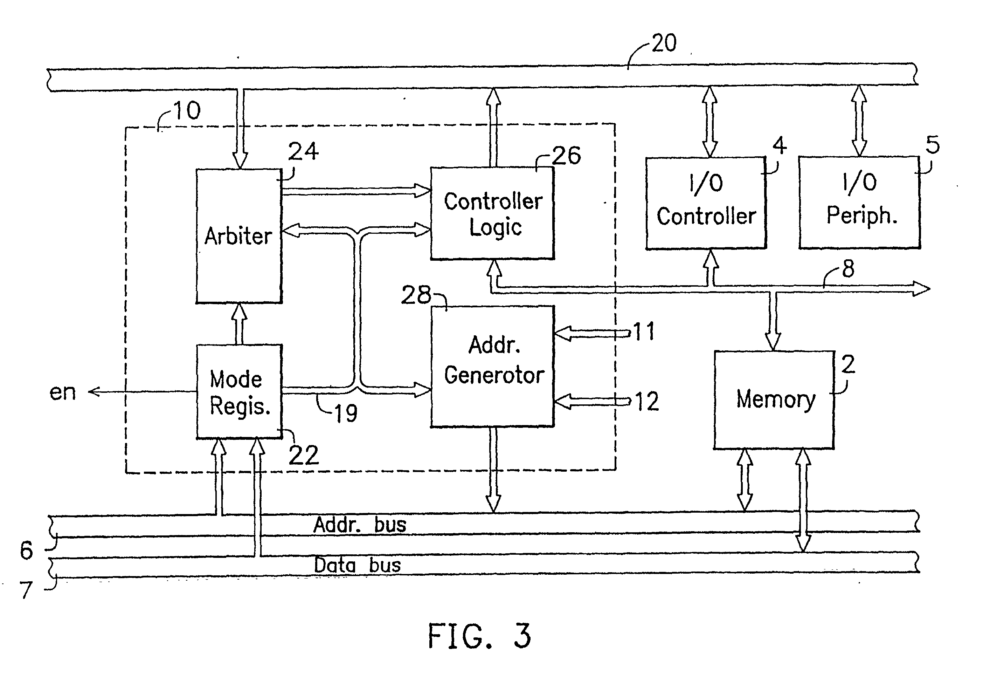

Referring to FIG. 3, a block diagram is shown for DMA controller device 10 that can be used in the DMA logic unit 3 of FIG. 2. DMA controller 10 essentially includes a number of DMA transfer mode registers 22, request priority arbiter 24, address generator 28, and controller logic unit 26. DMA controller 10 also communicates with both I/0 peripheral devices 5 though respective I/O controllers 4, as well as main memory 2. For the sake of clarity, only one I/O controller 4 and accompanying I/O peripheral device 5 are shown to be residing on system buses 6 and 7, although typically there would be a multiple of I/O controllers 4 and I/O peripheral devices 5 present.

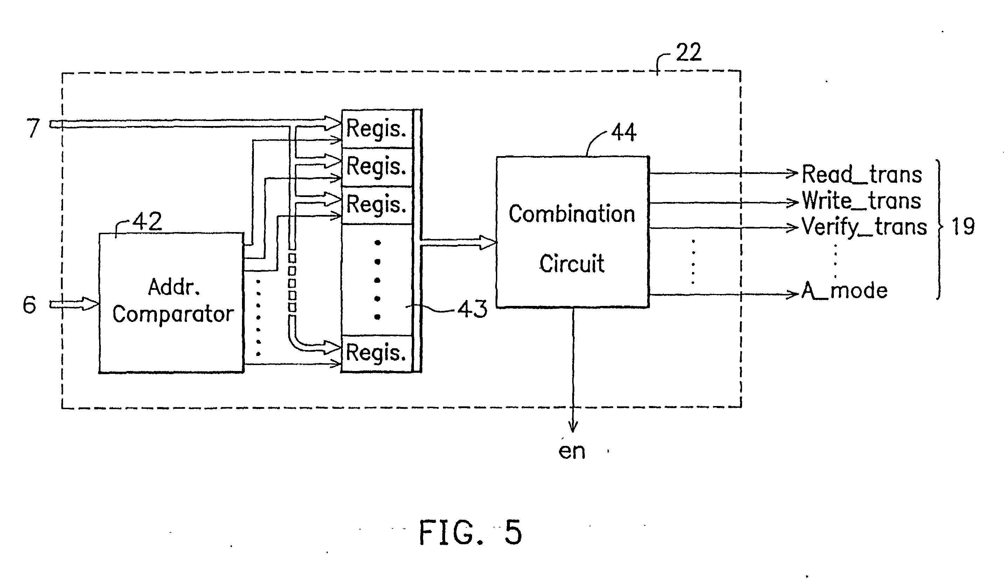

The group of transfer mode registers 22 are shown in more detail in FIG. 5. Transfer mode registers 22 are used to exchange their storage contents with base address register 11 and base count register 12. Each mode register 43 obtains information from data bus 7 by comparing the address from address bus 6 and that programmed in address comparator 42, in order to generate one of the various modes of DMA transfer operation for each one of the I/O peripheral devices, which is sending in its DMA service request through its corresponding DMA channel. The decided transfer mode concerns the details of the DMA transfer as requested, which include, for example, the addressing mode to be employed, as well as the selection of either reading from or writing to the memory of the host system involved in the DMA transfer. These details can be set up based on the contents of combination circuit 44, for example, transfer modes indicated in FIG. 5 include Read_trans, Write_trans, Verify_trans, A_mode and the like. Those mode signals are sent over bus 19 to other elements in the DMA logic unit.

Enable signal en is also generated by combination circuit 44 and sent to first and second multiplexers 13 and 14, as well as to first and second alignment logic unit 15 and 16, for the discrimination of the use of either the addressing mode in accordance with the DMA logic unit of the present invention, or the prior art addressing mode for data transfer in the DMA access to be initiated. This can be observed in FIG. 2, wherein enable signal en as output by the DMA controller 10 is shown to be sent to first and second alignment logic units and multiplexers 15, 16, 13 and 14 respectively.

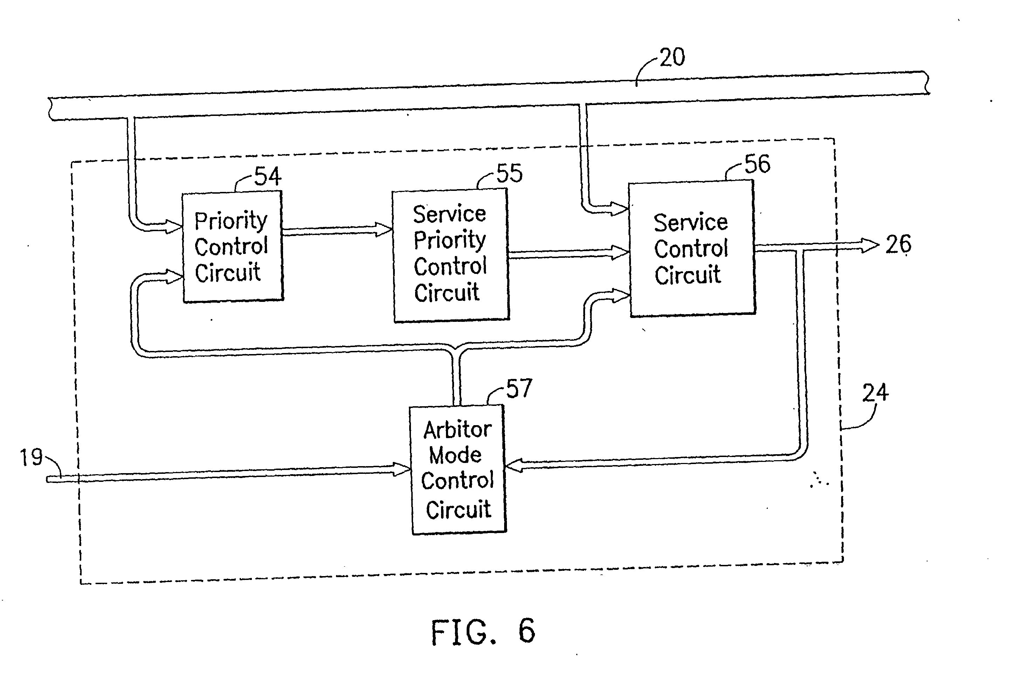

Referring back to FIG. 3, request priority arbiter 24 is used to implement priority arbitration among the various outstanding service requests initiated by the various I/O peripheral devices 5. As shown in more detail in FIG. 6, arbiter 24 consists of a combination of circuits including priority control circuit 54, service priority control circuit 55, service control circuit 56 and arbiter mode control circuit 57. The arbitration of priority is based on the DMA transfer modes as set up in transfer mode registers 22 and sent over bus 19 to be accepted by arbiter mode control circuit 57. Those skilled in the art can appreciate that a priority arrangement in the DMA transfer is certainly an important criteria to maintain orderly operation of the host computer system.

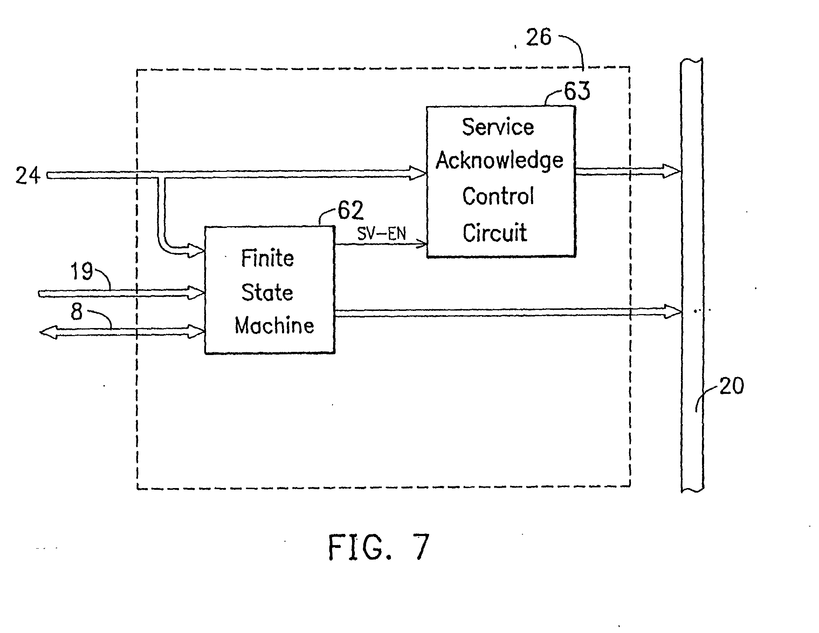

Now turning to FIG. 7, controller logic unit 26 is used to timely issue control signals to microprocessor CPU 1 via bus 8 and to I/O peripheral devices 5 via system bus 20. Finite state machine 62 is coupled with signal bus 19 and receives mode signals from mode register 22. If DMA operations are going to start, finite state machine 62 sends out a bus request over bus 8 to microprocessor CPU 1 and makes microprocessor CPU 1 relinquish control over buses 6 and 7 so that I/O peripheral devices 5 and main memory 2 can be prepared for upcoming DMA transfer operations. When finite state machine receives a recognition signal over lines 8 from CPU, it will enable service acknowledge control circuit 63 to generate control signals over bus 20 based on the service request provided by arbiter 24.

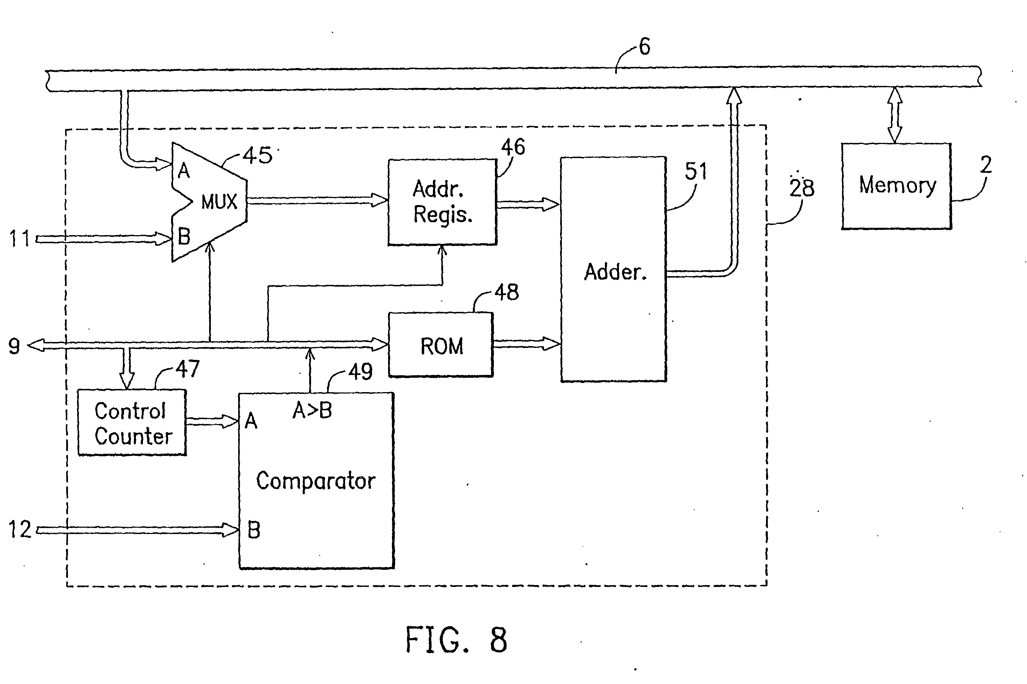

As shown in FIG. 8, address generator 28 is used to generate the physical address to be used in the subsequently initiated DMA transfers based on the contents of DMA transfer mode registers 22.

If the data transfer mode is coded with a page address, that is, transfer in a fashion of the conventional DMA architecture, mode register 22 will send out the enable signal to force multiplexers 13 and 14 to disconnect the data path directly from data bus 7, and thus let the data aligned in alignment logic units 15 and 16 enter base address register 11 and base count register 12.

As is shown in FIG. 8, the physical address as generated by address generator 28 is fetched via system address bus 6 to main memory 2 of the system, so that the location in main memory 2 can be pointed to facilitate the DMA data transfer.

Moreover, address generator 28 is also provided with control counter 47 and comparator 49 for the control of the number of data bytes in the first and the last transfer. When the data transferred exceeds the values stored in base count register, i.e., when comparator 49 determines that values counted by control counter are larger than that of the base count register, it will send out a signal to stop the DMA operation. At the same time, the address bits for each transfer must be on the boundary set by 2^{m}, where m is an integer number and 2^{m} is smaller than or equal to the number of bytes allowed in the memory space decided by the contents of base count register 12. ROM 48 is decoded by control signals from mode register 22 and outputs a 2 -bit value to adder 51 for generating a new address with 2^{m} bits. Multiplexer 45 selects one of its two input sources for output to address register 46. One input source of multiplexer 45 is connected to address bus 6, while the other input source is connected to the output of base address register 11. Multiplexer 45 is used for obtaining the present address for the DMA transfer either from base address register 11 as organized by the alignment logic unit 15, or the new base address as generated by the processing of adder 51. The selection of one from the two input sources of multiplexer 45 is controlled by signals from mode register 22.

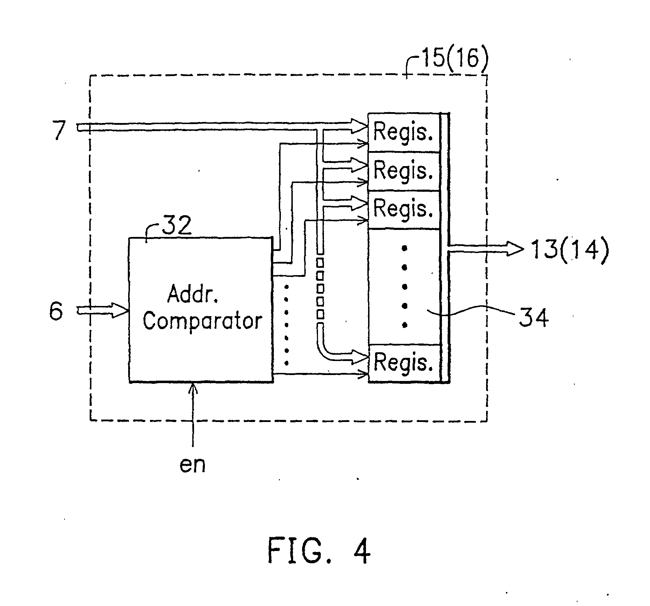

Next, referring to FIG. 4, shown is a block diagram of the address alignment logic units 15 and 16 that can be used in DMA logic unit 3 of FIG. 2. Both address alignment logic units 15 and 16 include address comparator 32 and address register array 34.

Address alignment logic units 15 and 16 are responsible for providing the compatibility of the present invention with the conventional requirements concerning the starting address and the number of data bytes involved in the programmed mode of DMA data transfer of the prior art. Address alignment logic units 15 and 16 receive information concerning the requirements of the DMA transfer requested, via system address and data buses 6 and 7.

Based on the received information, and by the initiation of the en enable signal as issued by mode register 22 of DMA controller 10, a comparison is made by address comparator 32 to select a corresponding register in data register array 34 for storing the data information received on system buses 7. While registers 34 are used for storing data information, which register is chosen to store data depends on the address received from address bus 6. This allows direct hardware level compatibility with the prior art mode of DMA transfer requirements. With the provision of this hardware level of compatibility, no software program or firmware routine is needed for the implementation of the prior art mode of DMA transfer by the DMA logic unit of the present invention as such programming tasks are accomplished by this hardware implementation of the DMA logic unit.

Based on a DMA logic unit such as the preferred embodiment described above, in a personal computer system based on, for example, the 32-bit Intel i486 microprocessor, the suitable data bit width number would be 32. There would need to be only two register content programming steps to prepare for implementing a DMA transfer operation. Namely, the first register content programming would involve storing the 32-bit base address in the base address register. The second register content programming would involve storing the 32-bit base count value in the base count register.

In comparison with the number of preliminary steps of operations that are required before the actual transfer is initiated, the present invention enjoys having a reduced number of preparation steps while providing wider addressing space width (e.g., represented by the wide 32-bit addressing bits). CPU operations required for the preliminary preparation in the DMA logic unit of the present invention can thus be greatly simplified while enjoying wider width of the DMA data transfer along with the additional advantage of alignment of address range.

After alignment in accordance with the present invention, data transfer over system buses is in the format of full bit width (compared with the buses) and thereby increases the efficiency of the DMA operation. Moreover, the aligned data can eliminate the page address mode. Without page address, more data information can be transferred between memory devices.

These advantages are important features in applications where multimedia hardware installed in wide and fast local buses, such as in the VESA or PCI bus, are becoming more and more popular, and the size of data information is becoming larger in size as well.

## Claims

1. A direct memory access control apparatus (3) of a computer system, said computer system including a CPU (1), a memory subsystem (2), a system bus including an address bus (6) and a data bus (7), and a plurality of I/O peripheral devices, said plurality of I/O peripheral devices connected to said computer system via said system bus, said direct memory access control apparatus controlling connection of selected ones of said plurality of I/O peripheral devices to said memory subsystem (2) for a direct memory transfer of a block of data between a selected one of said plurality of I/O peripheral devices and said memory subsystem (2) upon request by said I/O peripheral devices, said direct memory access control apparatus (3) comprising:
a base address register (11) connected to said system bus for receiving a base address indicating a starting address for said one of said plurality of I/O peripheral devices to initiate said direct memory transfer of a block of data, said base address register having a storage data bit width compatible with said starting address;
a base count register (12) connected to said system bus for receiving a base count indicating a size of said direct memory transfer of a block of data, said base count register having a storage data bit width compatible with said starting address; and
a direct memory access controller (10) receiving request signals issued by any one of said plurality of I/O peripheral devices requesting said direct memory transfer of a block of data and arbitrating a selection of one of said plurality of I/O peripheral devices based on a predetermined priority scheme, said direct memory access controller acknowledging said selected one of said plurality of I/O peripheral devices for commencing said direct memory transfer of a block of data and utilizing said base address and said base count for said direct memory transfer of a block of data to said starting address, said direct memory access controller (10) having a starting address bit width compatible with an address bit width for addressing said memory subsystem (2), **characterised in that** the direct memory access control apparatus (3) further comprises:
a first alignment logic unit (15) connected to said address bus (6) and to said data bus (7) for receiving a first base address information and corresponding page address information, said first address information and corresponding page address information being aligned for generating a base address for a first type of said direct memory transfer of a block of data, said first alignment logic unit (15) having a base address bit width compatible with the received address information;
a second alignment logic unit (16) connected to said address bus (6) and to said data bus (7) for receiving a first base count information and corresponding page address information, said first base count information and corresponding page address information being aligned for generating a base count for said first type of said direct memory transfer of a block of data, said second alignment logic unit (16) having a base count data bit width compatible with the received information;
a first multiplexer (13) having a first input connected to the output of said first alignment logic unit (15) for receiving said generated base address for said first type of said direct memory transfer of a block of data, and a second input connected to said data bus (7) for receiving a second base address information, said first multiplexer outputting a selected one of its two inputs upon triggering of an enable signal, said first multiplexer having an output data bit width compatible with the input data; and
a second multiplexer (14) having a first input connected to the output of said second alignment logic unit (16) for receiving said generated base count for said first type of said direct memory transfer of a block of data, and a second input connected to said data bus (7) for receiving a second base count information, said second multiplexer outputting a selected one of its two inputs upon triggering of said enable signal, said second multiplexer having an output data bit width compatible with the input data;
wherein each of said first and second alignment logic units include:
an address register array (34) having a plurality of address registers for storing said base address and count information; and
an address comparator (32) strobed by said enable signal for comparing said received base address information and corresponding page address information for generating a selecting signal for selecting one register in said address register array for outputting aligned address information to said first and second multiplexers;
and wherein said direct memory access controller (10) includes:
a plurality of transfer mode registers (22) coupled to said base address and base count registers for examining said base address and base count information, each of said plurality of transfer mode registers determining a transfer mode of the various modes of direct memory access transfer operation for each one of said plurality of I/O peripheral devices for said direct memory transfer of a block of data, and generating control signals which include the addressing mode to be employed, and generating said enable signal (en) sent to said first and second multiplexers (13, 14) and to said first and second alignment logic unit (15, 16), forcing said multiplexers (13 and 14) to disconnect the data path directly from said data bus (7), letting the data aligned in said alignment logic units (15, 16) enter said base address register (11) and said base count register (12) if said data transfer mode is coded with a page address;
an address generator (28) for receiving said generated control signals and for generating physical address information for commencing said direct transfer of data based on the contents of said transfer mode registers (22).

2. A direct memory access control apparatus according to claim 1,
wherein said direct memory access controller (10) generates said base address and said base count information such that said direct memory transfer of a block of data commences at an address boundary determined by 2^{m}, wherein m is an integer, and m is smaller than or equal to said data bit width of said CPU (1).

3. A direct memory access control apparatus according to any of the preceding claims, wherein said direct memory access controller (10) includes:
an arbiter (24) receiving said requests issued by said any one of said plurality of I/O peripheral devices and arbitrating the granting of said system bus for commencing said direct memory transfer of a block of data based on information stored in said transfer mode registers by issuing an acknowledge signal to a prioritized one of said I/O peripheral device; and
a control logic unit (26) receiving said generated control signal for generating triggering signals for outputting to said prioritized I/O peripheral device, wherein said prioritized I/O peripheral device in response to said triggering signals commences said direct memory transfer of a block of data to or from said memory subsystem of the computer system.

## Patentansprüche

1. Eine Steuervorrichtung (3) für direkten Speicherzugriff eines Computersystems, wobei dieses umfaßt eine zentrale Prozessoreinheit (CPU) (1), ein Speicher-Untersystem (2), einen Systembus einschließlich eines Adressenbus (6) und eines Datenbus (7) und eine Mehrzahl Eingabe-/Ausgabe-Peripherieeinrichtungen, die mit dem Computersystem über den Systembus geschaltet sind, wobei die Steuervorrichtung für direkten Speicherzugriff eine Verbindung ausgewählter aus der Mehrzahl Eingabe-/Ausgabe-Peripherieeinrichtungen mit dem Speicher-Untersystem (2) für eine direkte Speicherübermittlung eines Datenblocks zwischen einer ausgewählten aus der Mehrzahl der Eingabe-/Ausgabe-Peripherieeinrichtungen und dem Speicher-Untersystem (2) auf Anforderung durch die Eingabe-/Ausgabe-Peripherieeinrichtungen steuert, wobei die Steuervorrichtung (3) für direkten Speicherzugriff umfaßt:
ein Basis-Adressenregister (11), das mit dem Systembus zum Empfangen einer Basisadresse geschaltet ist, die eine Startadresse für die eine aus der Mehrzahl Eingabe-/Ausgabe-Peripherieeinrichtungen anzeigt, um die direkte Speicherübertragung eines Datenblocks zu initiieren, wobei das Basis-Adreßregister eine Speicherdaten-Bitbreite hat, die mit der Startadresse kompatibel ist;
ein Basis-Zählregister (12), das mit dem Datenbus zum Empfangen einer Basiszählung geschaltet ist, die die Größe der direkten Speicherübertragung eines Datenblocks anzeigt, wobei das Basis-Zählregister eine Speicherdaten-Bitbreite hat, die mit der Startadresse kompatibel ist; und
ein Steuergerät (10) für direkten Speicherzugriff, das Anforderungssignale empfängt, die von irgendeiner der Mehrzahl Eingabe-/Ausgabe-Peripherieeinrichtungen abgegeben werden und die direkte Speicherübertragung eines Datenblocks sowie beliebig die Auswahl einer der Mehrzahl Eingabe-/Ausgabe-Peripherieeinrichtungen festsetzen, basierend auf einem vorbestimmten Prioritätsschema, wobei das Steuergerät für direkten Speicherzugriff die ausgewählte der Mehrzahl Eingabe-/Ausgabe-Peripherieeinrichtungen zum Beginnen der direkten Speicherübertragung eines Datenblocks bestätigt und die Basisadresse sowie die Basiszählung für die direkte Speicherübertragung eines Datenblocks an die Startadresse benutzt, wobei das Steuergerät (10) für direkten Speicherzugriff eine Startadressen-Bitbreite hat, die kompatibel mit der Adressen-Bitbreite zum Adressieren des Speicher-Untersystems (2) ist, **dadurch gekennzeichnet, daß** die Steuervorrichtung (3) für direkten Speicherzugriff weiterhin umfaßt:
eine erste Ausricht-Logikeinheit (15), die mit dem Adressenbus (6) und dem Datenbus (7) zum Empfangen einer ersten Basis-Adresseninformation und entsprechender Seiten-Adresseninformation geschaltet ist, wobei die erste Adresseninformation und die entsprechende Seiten-Adresseninformation zum Erzeugen einer Basisadresse für einen ersten Typ der direkten Speicherübertragung eines Datenblocks ausgerichtet ist, wobei die erste Ausricht-Logikeinheit (15) eine Basisadressen-Bitbreite hat, die mit der empfangen Adresseninformation kompatibel ist;
eine zweite Ausricht-Logikeinheit (16), die mit dem Adressenbus (6) und dem Datenbus (7) zum Empfangen einer ersten Basis-Zählinformation und entsprechender Seiten-Adresseninformation geschaltet ist, wobei die erste Basis-Zählinformation und entsprechende Seiten-Adresseninformation zum Erzeugen einer Basiszählung für den ersten Typ der direkten Speicherübertragung eines Datenblocks ausgerichtet sind, wobei die zweite Ausricht-Logikeinheit (16) eine Basis-Zähldaten-Bitbreite hat, die mit der empfangenen Information kompatibel ist;
einen ersten Multiplexer (13), der einen ersten Eingang, verbunden mit dem Ausgang der ersten Ausricht-Logikeinheit (15) zum Empfangen der erzeugten Basisadresse für den ersten Typ der direkten Speicherübertragung eines Datenblocks, sowie einen zweiten Eingang, geschaltet mit dem Datenbus (7) zum Empfangen einer zweiten Basis-Adresseninformation aufweist, wobei der erste Multiplexer einen ausgewählten seiner zwei Eingänge auf Triggern eines Freigabesignals ausgibt, wobei der erste Multiplexer eine Ausgabedaten-Bitbreite hat, die mit den Eingabedaten kompatibel ist; und
einen zweiten Multiplexer (14), der einen ersten Eingang, geschaltet mit dem Ausgang der zweiten Ausricht-Logikeinheit (16) zum Empfangen der erzeugten Basiszählung für den ersten Typ der direkten Speicherübertragung eines Datenblocks, und einen zweiten Eingang, geschaltet mit dem Datenbus (7) zum Empfangen einer zweiten Basiszählungsinformation, aufweist, wobei der zweite Multiplexer einen ausgewählten seiner zwei Eingänge beim Triggern des Freigabesignals ausgibt, wobei der zweite Multiplexer eine Ausgabedaten-Bitbreite hat, die mit den Eingabedaten kompatibel ist;
wobei jede der ersten und zweiten Ausricht-Logikeinheiten umfaßt:
eine Adressen-Registeranordnung (34), die eine Mehrzahl Adressenregister zum Speichern der Basisadresse und Zählinformation aufweist; und
einen Adressen-Komparator (32), der von dem Freigabesignal zum Vergleichen der empfangenen Basis-Adresseninformation und entsprechender Seiten-Adresseninformation zum Erzeugen eines Auswählsignals zum Auswählen eines Registers in der Adressen-Registeranordnung zwecks Ausgebens ausgerichteter Adresseninformation an die ersten und zweiten Multiplexer abgetastet wird;
und wobei das Steuergerät (10) für direkten Speicherzugriff umfaßt:
eine Mehrzahl Übertragungsmodusregister (22), die mit den Basisadressen- und Basiszählregistern zum Prüfen der Basisadressen- und Basiszählinformation verbunden sind, wobei jedes der Übertragungsmodusregister einen Übertragungsmodus der verschiedenen Moden einer Direktspeicherzugriff-Übertragungsoperation für jede der Mehrzahl der Eingabe-/Ausgabe-Peripherieeinrichtungen für die Direktspeicherübertragung eines Datenblocks bestimmt und Steuersignale erzeugt, die den zu verwendenden Adressiermodus einschließen, und das Freigabesignal (en) erzeugt, das an die ersten und zweiten Multiplexer (13, 14) und an die erste und zweite Ausricht-Logikeinheit (15, 16) gesandt wird, wobei die Multiplexer (13 und 14) gezwungen werden, den Datenpfad direkt von dem Datenbus (7) zu trennen und die in den Ausricht-Logikeinheiten (15, 16) ausgerichteten Daten das Basis-Adressenregister (11) und das Basis-Zählregister (12) eintreten zu lassen, wenn der Datenübertragungsmodus mit einer Seitenadresse kodiert ist;
einen Adressengenerator (28) zum Empfangen der erzeugten Steuersignale und zum Erzeugen physikalischer Adresseninformation zum Beginnen der direkten Datenübertragung, basierend auf dem Inhalt der Übertragungsmodusregister (22).

2. Eine Steuervorrichtung für direkten Speicherzugang gemäß Anspruch 1,
wobei die Steuerung (3) zum direkten Speicherzugriff die Basisadressen- und Basiszählinformation so erzeugt, daß die direkte Speicherübertragung eines Datenblocks einer durch 2^{m} bestimmten Adressengrenze beginnt, wobei m eine ganze Zahl und kleiner als oder gleich der Datenbitbreite der CPU (1) ist.

3. Eine Steuervorrichtung für direkten Speicherzugang gemäß einem der vorhergehenden Ansprüche, wobei das Steuergerät (3) für direkten Speicherzugriff umfaßt:
einen Arbiter (24), der die Anforderungen, ausgegeben von irgendeiner der Mehrzahl Eingabe-/Ausgabe-Peripherieeinrichtungen, empfängt und die Gewährung des Systembusses zum Beginn der direkten Speicherübertragung eines Datenblocks, basierend auf Information, die in den Übertragungsmodusregistern gespeichert ist, durch Ausgabe eines Bestätigungssignals an eine vorrangige der Eingabe-/Ausgabe-Peripherieeinrichtungen (willkürlich) festsetzt; und
eine Steuerlogikeinheit (26), die das erzeugte Steuersignal zum Erzeugen von Triggersignalen zum Ausgeben der vorrangigen Eingabe-/Ausgabe-Peripherieeinrichtung empfängt, wobei die vorrangige Eingabe-/Ausgabe-Peripherieeinrichtung auf die Triggersignale hin die direkte Speicherübertragung eines Datenblocks an das oder von dem Speicher-Untersystem des Computersystems beginnt.

## Revendications

1. Dispositif (3) de commande d'accès direct à la mémoire d'un système informatique, ledit système informatique incluant une CPU (unité centrale de traitement) (1), un sous-système (2) de mémoire, un bus de système incluant un bus (6) d'adresse et un bus (7) de données, et une pluralité de dispositifs périphériques d'entrée/sortie (I/O), ladite pluralité de dispositifs périphériques d'entrée/sortie étant connectée audit système informatique par l'intermédiaire dudit bus de système, ledit dispositif de commande d'accès direct à la mémoire commandant la connexion de certains, choisis, de ladite pluralité de dispositifs périphériques d'entrée/sortie audit sous-système (2) de mémoire pour un transfert direct en mémoire d'un bloc de données entre l'un, choisi, de ladite pluralité de dispositifs périphériques d'entrée/sortie et ledit sous-système (2) de mémoire sur demande par lesdits dispositifs périphériques d'entrée/sortie, ledit dispositif (3) de commande d'accès direct à la mémoire comprenant :
un registre (11) d'adresse de base connecté audit bus de système pour recevoir une adresse de base indiquant une adresse de début pour que ledit un de ladite pluralité de dispositifs périphériques d'entrée/sortie lance ledit transfert direct en mémoire d'un bloc de données, ledit registre d'adresse de base ayant une largeur en bits des données de mémorisation compatible avec ladite adresse de début ;
un registre (12) de compte de base connecté audit bus de système pour recevoir un compte de base indiquant la taille dudit transfert direct en mémoire d'un bloc de données, ledit registre de compte de base ayant une largeur en bits des données de mémorisation compatible avec ladite adresse de début ; et
un régisseur (10) d'accès direct à la mémoire recevant des signaux de demande émis par l'un quelconque de ladite pluralité de dispositifs périphériques d'entrée/sortie demandant ledit transfert direct en mémoire d'un bloc de données et arbitrant un choix de l'un de ladite pluralité de dispositifs périphériques d'entrée/sortie en se basant sur un système de priorité prédéterminé, ledit régisseur d'accès direct à la mémoire accusant réception dudit un, choisi, de ladite pluralité de dispositifs périphériques d'entrée/sortie pour commencer ledit transfert direct en mémoire d'un bloc de données et utilisant ladite adresse de base et ledit compte de base pour ledit transfert direct en mémoire d'un bloc de données à ladite adresse de début, ledit régisseur (10) d'accès direct à la mémoire ayant une largeur en bits de l'adresse de début compatible avec une largeur en bits de l'adresse pour adresser ledit sous-système (2) de mémoire, **caractérisé en ce que** le dispositif (3) de commande d'accès direct à la mémoire comprend en outre:
une première unité logique (15) d'alignement connectée audit bus (6) d'adresse et audit bus (7) de données pour recevoir une première information d'adresse de base et une information d'adresse de page correspondante, lesdites première information d'adresse et information de page correspondante étant alignées pour engendrer une adresse de base pour un premier type dudit transfert direct en mémoire d'un bloc de données, ladite première unité logique (15) d'alignement ayant une largeur en bits de l'adresse de base compatible avec l'information d'adresse reçue ;
une seconde unité logique (16) d'alignement connectée audit bus (6) d'adresse et audit bus (7) de données pour recevoir une première information de compte de base et une information d'adresse de page correspondante, lesdites première information de compte de base et information d'adresse de page correspondante étant alignées pour engendrer un compte de base pour ledit premier type dudit transfert direct en mémoire d'un bloc de données, ladite seconde unité logique (16) d'alignement ayant une largeur en bits de données de compte de base compatible avec l'information reçue ;
un premier multiplexeur (13) ayant une première entrée connectée à la sortie de ladite première unité logique (15) d'alignement pour recevoir ladite adresse de base engendrée pour ledit premier type dudit transfert direct en mémoire d'un bloc de données, et une seconde entrée connectée audit bus (7) de données pour recevoir une seconde information d'adresse de base, ledit premier multiplexeur sortant l'une, choisie, de ses deux entrées sur déclenchement d'un signal de validation, ledit premier multiplexeur ayant une largeur en bits des données de sortie compatible avec les données d'entrée ; et
un second multiplexeur (14) ayant une première entrée connectée à la sortie de ladite seconde unité logique (16) d'alignement pour recevoir ledit compte de base engendré pour ledit premier type dudit transfert direct en mémoire d'un bloc de données, et une seconde entrée connectée audit bus (7) de données pour recevoir une seconde information de compte de base, ledit second multiplexeur sortant l'une, choisie, de ses deux entrées sur déclenchement dudit signal de validation, ledit second multiplexeur ayant une largeur en bits des données de sortie compatible avec les données d'entrée ;
dans lequel chacune desdites première et seconde unités logiques d'alignement comprend :
un groupement (34) de registres d'adresse ayant une pluralité de registres d'adresse pour mémoriser ladite in formation d'adresse et de compte de base ; et
un comparateur (32) d'adresses, déclenché par ledit signal de validation, destiné à comparer ladite information d'adresse de base reçue et ladite information d'adresse de page correspondante pour engendrer un signal de choix destiné à choisir un registre dans ledit groupement de registres d'adresse pour sortir l'information d'adresse alignée vers lesdits premier et second multiplexeurs ;
et dans lequel ledit régisseur (10) d'accès direct à la mémoire comprend :
une pluralité de registres (22) de mode de transfert associés auxdits registres d'adresse de base et de compte de base pour examiner ladite information d'adresse de base et de compte de base, chacun de ladite pluralité de registres de mode de transfert déterminant un mode de transfert parmi les divers modes de l'opération de transfert par accès direct à la mémoire pour chacun de ladite pluralité de dispositifs périphériques d'entrée/sortie pour ledit transfert direct en mémoire d'un bloc de données, et engendrant des signaux de commande qui comprennent le mode d'adressage à employer, et engendrant ledit signal (en) de validation envoyé auxdits premier et second multiplexeurs (13, 14) et auxdites première et seconde unités logiques (15, 16) d'alignement, en forçant lesdits multiplexeurs (13 et 14) à déconnecter le trajet de données directement dudit bus (7) de données, en laissant les données alignées dans lesdites unités logiques (15, 16) d'alignement entrer dans ledit registre (11) d'adresse de base et dans ledit registre (12) de compte de base, si ledit mode de transfert de données est codé avec une adresse de page;
un générateur (28) d'adresse destiné à recevoir lesdits signaux de commande engendrés et à engendrer de l'information d'adresse physique pour commencer ledit transfert direct de données en se basant sur le contenu desdits registres (22) de mode de transfert.

2. Dispositif de commande d'accès direct à la mémoire selon la revendication 1,
dans lequel ledit régisseur (10) d'accès direct à la mémoire engendre ladite information d'adresse de base et ladite information de compte de base de façon telle que ledit transfert direct en mémoire d'un bloc de données commence à une frontière d'adresse déterminée par 2^{m}, où m est un nombre entier, et m est inférieur ou égal à ladite largeur en bits des données de ladite CPU (1).

3. Dispositif de commande d'accès direct à la mémoire selon l'une quelconque des revendications précédentes, dans lequel ledit régisseur (10) d'accès direct à la mémoire comprend :
un arbitre (24) recevant lesdites demandes émises par ledit un quelconque de ladite pluralité de dispositifs périphériques d'entrée/sortie et arbitrant l'affectation dudit bus de système pour commencer ledit transfert direct en mémoire d'un bloc de données en se basant sur l'information mémorisée dans lesdits registres de mode de transfert en émettant un signal d'accusé de réception vers celui à qui l'on donne la priorité desdits dispositifs périphériques d'entrée/sortie ; et
une unité logique (26) de commande recevant ledit signal de commande engendré pour engendrer des signaux de déclenchement pour sortir vers ledit dispositif périphérique d'entrée/sortie à qui l'on a donné la priorité, dans lequel ledit dispositif périphérique d'entrée/sortie, à qui l'on a donné la priorité, en réponse auxdits signaux de déclenchement, commence ledit transfert direct en mémoire d'un bloc de données vers ou depuis ledit sous-système de mémoire du système informatique.
